# EUROPÄISCHE PATENTSCHRIFT

(11) **EP 0 879 722 B1**
(45) Veröffentlichungstag und Bekanntmachung des Hinweises auf die Patenterteilung: **25.08.2004**
(21) Anmeldenummer: 98105692.2
(22) Anmeldetag: 28.03.1998
(51) Int. Cl.: B60J 7/12

(54) **Faltverdeck für einen Personenkraftwagen**
Convertible soft top for passenger motor vehicle
Capote convertible pour voiture automobile de passagers

(30) Priorität: 03.04.1997 DE 19713710
(43) Veröffentlichungstag der Anmeldung: 25.11.1998
(73) Patentinhaber: CTS Fahrzeug-Dachsysteme GmbH, 21079 Hamburg (DE)
(72) Erfinder: Klein, Berthold, 71277 Rutesheim (DE); Aydt, Matthias, 71735 Eberdingen (DE)
(74) Vertreter: Müller, Gottfried

(56) Entgegenhaltungen:
- DE-A- 3 127 525
- US-A- 2 524 171
- US-A- 4 573 732

## Beschreibung

Die Erfindung betrifft ein Faltverdeck für einen Personenkraftwagen mit einem Verdeckgestänge und einem von diesem getragenen faltbaren Verdeckbezug gemäß dem Oberbegriff des Patentanspruchs 1.

Die DE 39 15 867 C1 behandelt einen Personenkraftwagen mit einem Faltverdeck, wobei das Verdeckgestänge unterhalb der Gürtellinie am Aufbau schwenkbar gelagert ist und das Faltverdeck in der zurückgeklappten Ablagestellung in einem heckseitigen Aufnahmeraum aufgenommen ist, der mittels eines Verdeckkastendeckels nach oben hin verschließbar ist. Der Aufnahmeraum ist - in der Draufsicht gesehen - etwa U-förmig ausgebildet und umfaßt einen querverlaufenden hinteren Abschnitt und zwei nach vorne gerichtete seitliche Abschnitte. Beim Zurückklappen des Faltverdecks wird der vordere, an den Windschutzscheibenrahmen angrenzende Verdeckabschnitt um etwa 180° nach hinten verschwenkt, dergestalt, daß sich der Querträger des vorderen Verdeckabschnitts im hinteren querverlaufenden Abschnitt des Aufnahmeraumes erstreckt.

Aufgabe der Erfindung ist es, für einen Personenkraftwagen mit einem hinter den Sitzen angeordneten Mittelmotor ein einen einfachen Aufbau aufweisendes Faltverdeck zu schaffen, das in zurückgeklappter Ablagestellung platzsparend vor und seitlich neben dem Mittelmotor in einem nach oben hin abgedeckten Aufnahmeraum aufnehmbar ist.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß das aus zwei gelenkig miteinander verbundenen, in der Draufsicht gesehen, etwa U-förmig profilierten Dachrahmenabschnitten bestehende Verdeckgestänge des Faltverdecks einen einfachen Aufbau aufweist, wobei durch die Lagerung des hintenliegenden Dachrahmenabschnitts oberhalb der Gürtellinie und durch die Klappbewegung des hintenliegenden Dachrahmenabschnitts um etwa 180° und des vorderen Dachrahmenabschnitts um etwa 360° während des Zurückklappens des Faltverdecks beide Dachrahmenabschnitte vor und seitlich neben dem Mittelmotor zu liegen kommen, so daß insbesondere - in Höhenrichtung gesehen - eine platzsparende Anordnung des Faltverdecks in der Ablagestellung erzielt wird. Durch diese Ausgestaltung wird kein zusätzlicher Aufnahmeraum über dem Motorraum für das abgelegte Verdeck benötigt.

Gemäß einer ersten Ausführungsform ist das Verdeckgestänge etwa in der Mitte zwischen Windschutzscheibenrahmen und aufbauseitiger Anlenkung geteilt und setzt sich aus einem vorderen Dachrahmenabschnitt und einem hinteren Dachrahmenabschnitt zusammen.

Bei einer zweiten Ausführungsform besteht das Verdeckgestänge aus einem äußeren Dachrahmenabschnitt und einem inneren Dachrahmenabschnitt, wobei der innere Dachrahmenabschnitt etwa in einen mittleren Bereich der Längserstreckung der seitlichen Schenkel des äußeren Dachrahmenabschnitts drehbar mit diesem verbunden ist. Durch die seitlich hochgezogenen, finnenartigen Abschnitte des Verdeckkastendeckels wird der Aufnahmeraum in Höhenrichtung erweitert.

Zwei Ausführungsbeispiele der Erfindung sind in der Zeichnung dargestellt und werden im folgenden näher erläutert.

Es zeigen
- Fig. 1: eine Teilseitenansicht auf einen Personenkraftwagen mit einer ersten Ausführungsform eines Faltverdecks in Schließstellung,
- Fig. 2: eine Teilseitenansicht entsprechend Fig. 1 mit einer zurückgeklappten Zwischenstellung des Faltverdecks,
- Fig. 3: eine Teilseitenansicht auf den Personenkraftwagen mit dem Faltverdeck in der heckseitigen Ablagestellung,

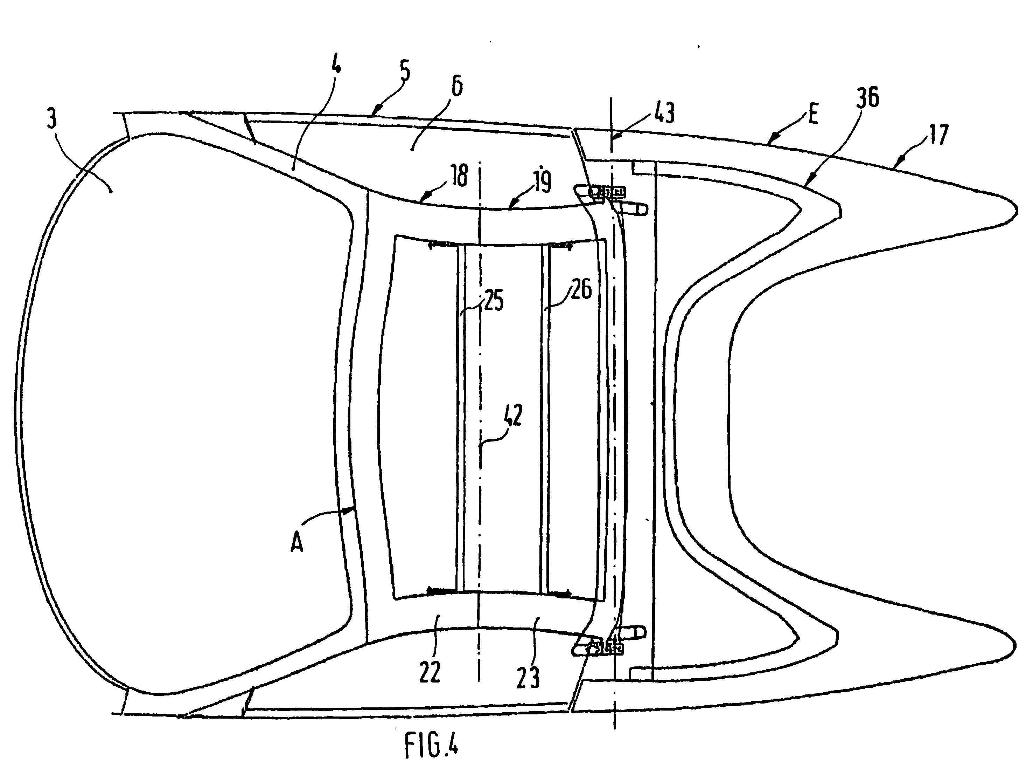

- Fig. 4: eine Teildraufsicht auf den Personenkraftwagen mit dem Faltverdeck in Schließstellung,
- Fig. 5: eine Teildraufsicht auf den Personenkraftwagen mit dem Faltverdeck in der Ablagestellung,

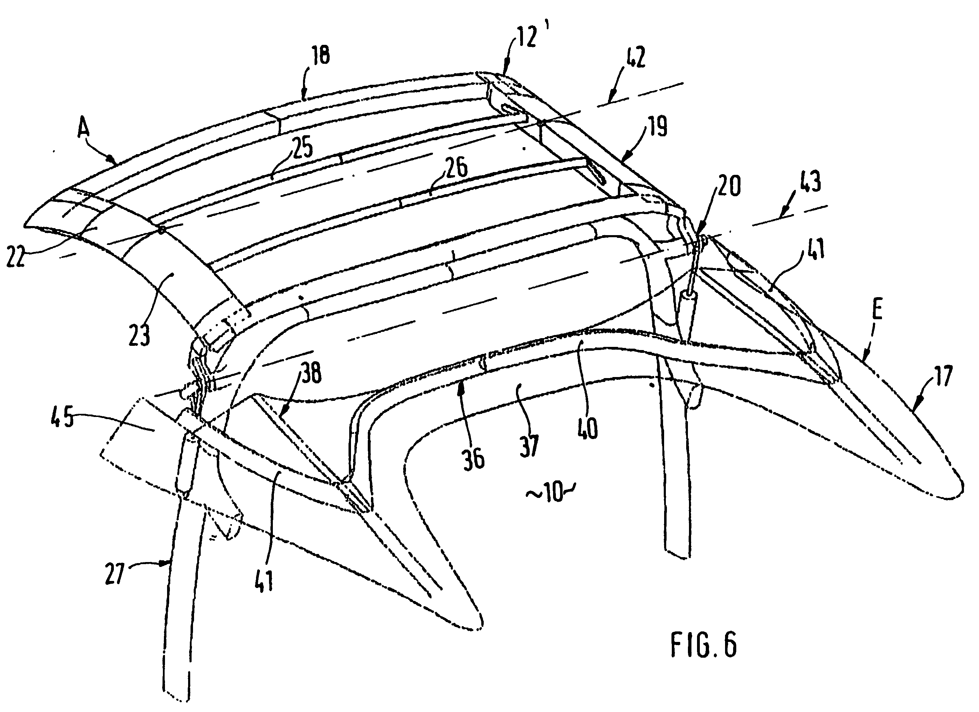

- Fig. 6: eine perspektivische Ansicht von schräg hinten auf das Verdeckgestänge des Faltverdecks und den Verdeckkastendeckel, jeweils in Schließstellung,
- Fig. 7: eine perspektivische Ansicht entsprechend Fig. 7, wobei hier der faltbare Verdeckbezug und die flexible Heckscheibe dargestellt sind,

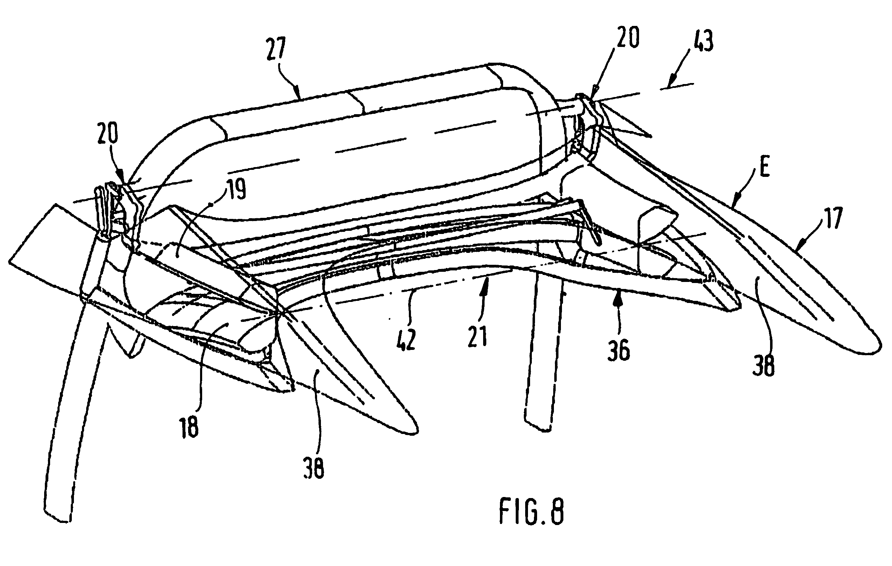

- Fig. 8: eine perspektivische Ansicht von schräg hinten auf das Faltverdeck in Ablagestellung und den geschlossenen Verdeckkastendeckel,
- Fig. 9: eine Teildraufsicht auf den Personenkraftwagen und eine zweite Ausführungsform des Faltverdecks in Schließstellung und

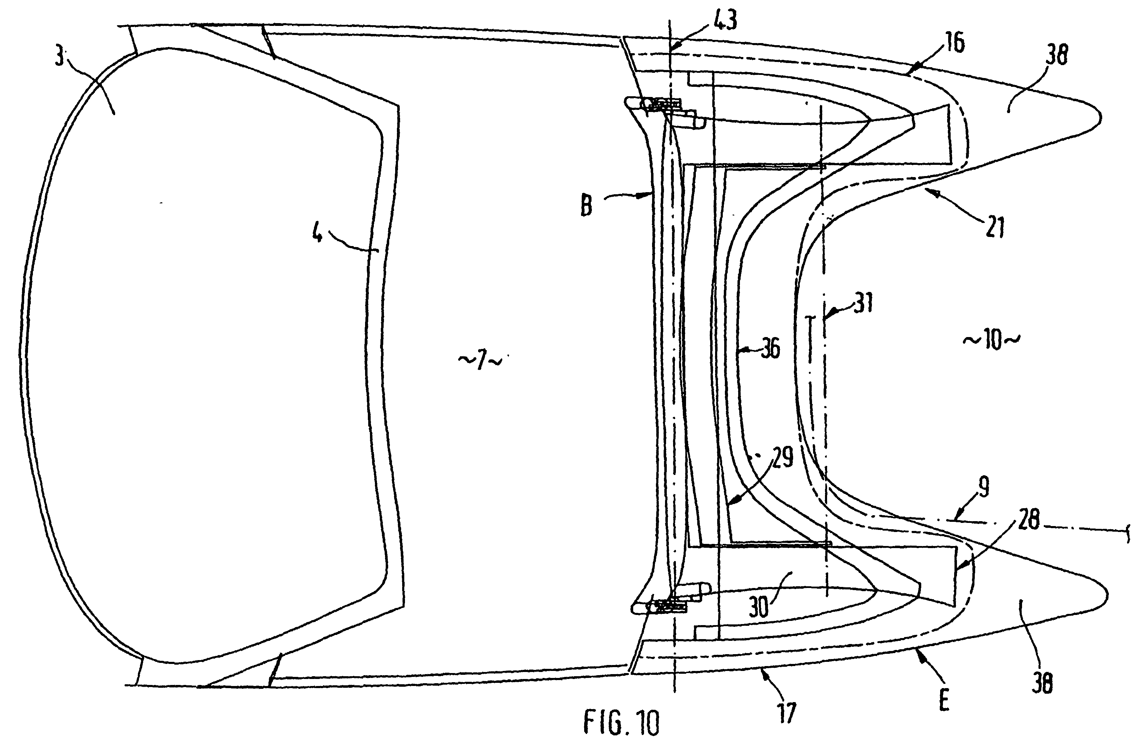

- Fig. 10: eine Teildraufsicht auf den Personenkraftwagen mit der zweiten Ausführungsform des Faltverdecks in Ablagestellung.

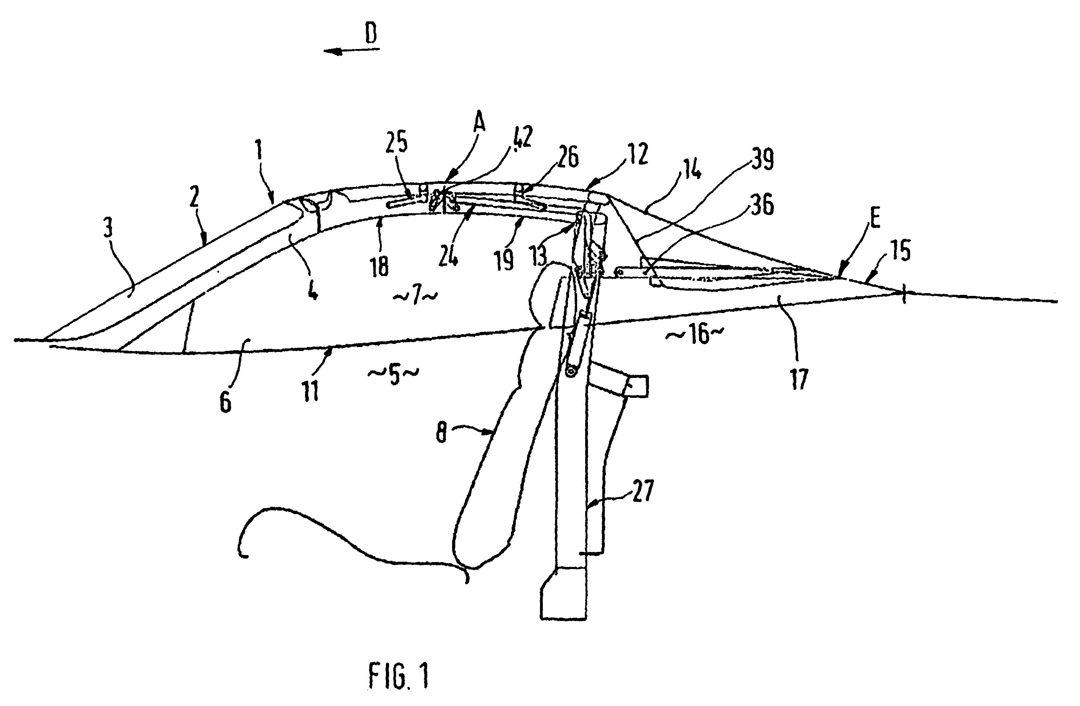

Der in Fig. 1 dargestellte Personenkraftwagen 1 umfaßt einen feststehenden Aufbau 2 mit einem eine Windschutzscheibe 3 aufnehmenden Windschutzscheibenrahmen 4 und seitliche Türen 5 mit in Höhenrichtung bewegbaren Türfensterscheiben 6.

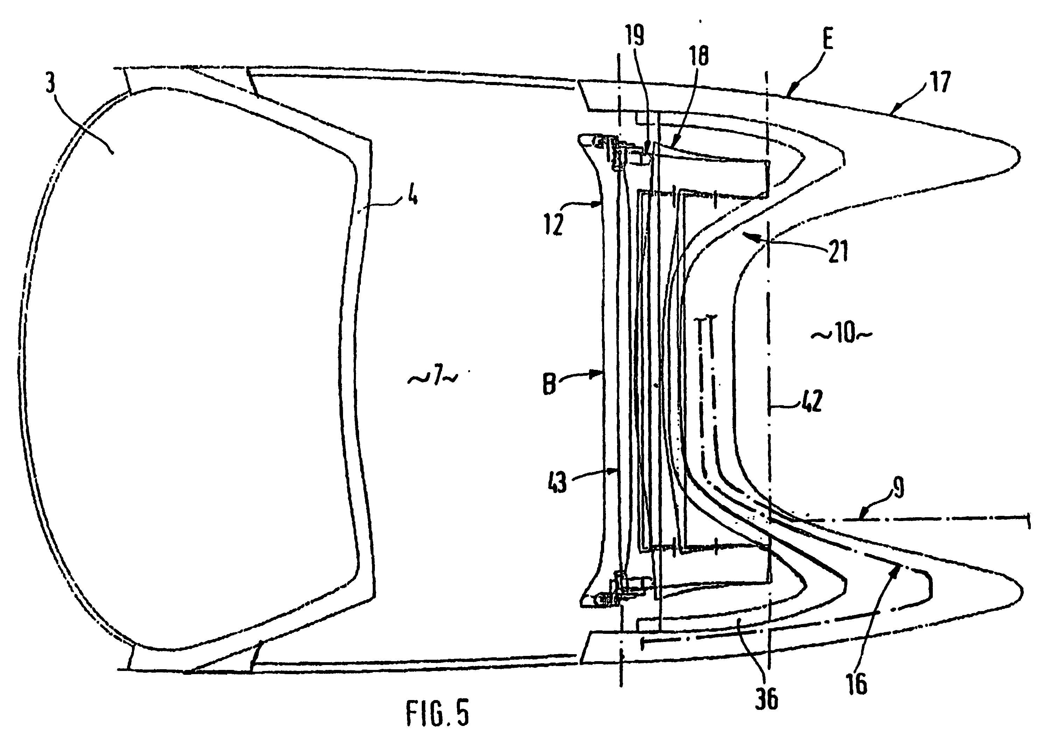

In einem Fahrgastraum 7 sind vordere Sitze 8 angeordnet. Hinter den vorderen Sitzen 8 erstreckt sich mit Abstand zu diesen ein Mittelmotor 9, der zumindest bereichsweise durch eine Motorhaube 10 nach oben hin abgedeckt ist (Fig. 5).

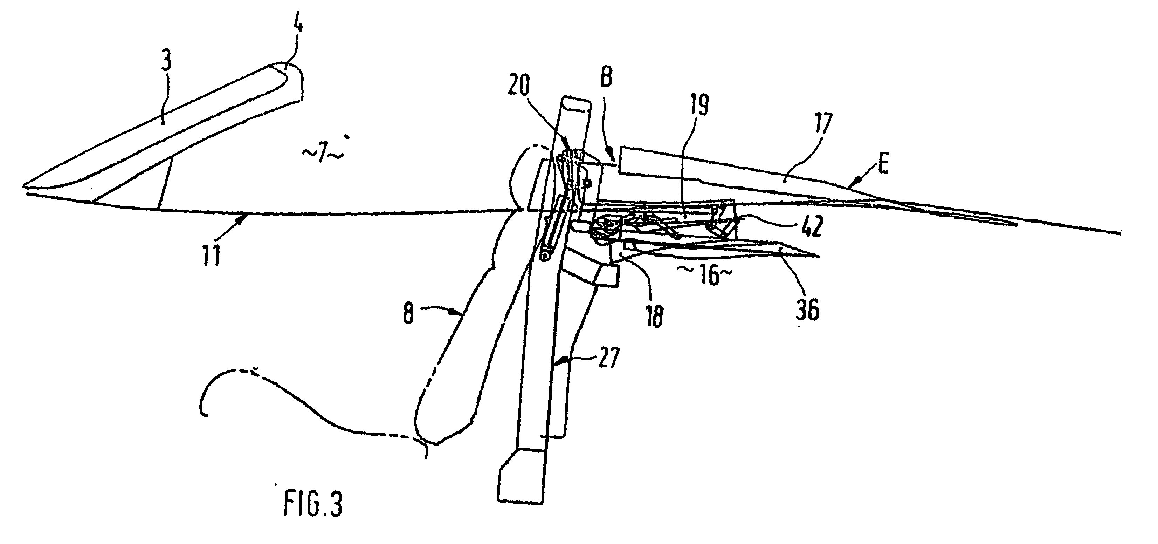

Oberhalb einer Gürtellinie 11 des Personenkraftwagens 1 ist ein Faltverdeck 12 angeordnet, das sich aus einem Verdeckgestänge 13 und einem von diesem getragenen faltbaren Verdeckbezug 14 zusammensetzt. Das Faltverdeck 12 ist von einer Schließstellung A (Fig. 1) über Zwischenstellungen (z.B. C) in eine heckseitige Ablagestellung B (Fig. 3) verlagerbar und umgekehrt. In der Schließstellung A deckt das Faltverdeck 12 den Fahrgastraum 7 nach oben hin ab und erstreckt sich vom Windschutzscheibenrahmen 4 bis zu einem Heckbereich 15. In der Ablagestellung B ist das Faltverdeck 12 in einem heckseitigen Aufnahmeraum 16 aufgenommen, der nach oben hin durch einen Verdeckkastendeckel 17 abgedeckt ist.

Im Ausführungsbeispiel wird der Aufnahmeraum 16 durch einen Verdeckkasten gebildet, der den Mittelmotor 9 vorne und abschnittsweise an seinen beiden Längsseiten umgibt. Der Aufnahmeraum 16 weist - in der Draufsicht gesehen - eine etwa U-förmige Kontur auf, wobei die offene Seite des U nach hinten gerichtet ist (Fig. 5).

Erfindungsgemäß umfaßt das Verdeckgestänge 13 des Faltverdecks 12 zwei - in der Draufsicht gesehen - etwa U-förmig profilierte Dachrahmenabschnitte 18, 19. In der Schließstellung A des Faltverdecks 12 sind die beiden Dachrahmenabschnitte 18, 19 mit ihren offenen Seiten einander zugekehrt und im gemeinsamen Verbindungsbereich über eine Drehachse 42 gelenkig miteinander verbunden. Der - in Fahrtrichtung D gesehen - weiter hintenliegende Dachrahmenabschnitt 19 ist oberhalb der Gürtellinie 11 an aufbauseitigen, außenliegenden Lagerabschnitten 20 schwenkbar gelagert. Die etwa horizontal ausgerichtete Drehachse 42 für die beiden Dachrahmenabschnitten 18, 19 sowie die Drehachse 43 zwischen dem hinteren Dachrahmenabschnitt 19 und den aufbauseitigen Lagerabschnitten 20 erstrecken sich in Fahrzeugquerrichtung. In der zurückgeklappten Ablagestellung B sind die beiden U-förmigen Dachrahmenabschnitte 18, 19 annähernd gleichgerichtet und zeigen mit ihren offenen Seiten 21 nach hinten hin. Beim Bewegen in die Ablagestellung B wird der hintenliegende Dachrahmenabschnitt 19 etwa um 180° verschwenkt, wogegen der andere Dachrahmenabschnitt 18 quasi eine Rotationsbewegung um ca. 360° beschreibt.

Gemäß einer ersten Ausführungsform ist das Verdeckgestänge 13 etwa mittig zwischen dem Windschutzscheibenrahmen 4 und den aufbauseitigen Lagerpunkten 20 geteilt und setzt sich aus einem vorderen, U-förmigen Dachrahmenabschnitt 18 und einem hinteren U-förmigen Dachrahmenabschnitt 19 zusammen. Beide Dachrahmenabschnitte 18, 19 sind an den freien Enden der aneinandergesetzten seitlichen Schenkel 22, 23 über die querverlaufende Drehachse 42 drehbar miteinander verbunden. Der vordere Dachrahmenabschnitt 18 ist in Schließstellung A des Faltverdecks 12 über nicht näher dargestellte lösbare Verschlüsse am Windschutzscheibenrahmen 4 festlegbar. Beide Dachrahmenabschnitte 18, 19 sind über Drehgelenke allein oder über eine zusätzliche Lenkerkinematik 24 miteinander verbunden. An beiden Dachrahmenabschnitten 18, 19 können zusätzlich Spannspriegel 25, 26 für den Verdeckbezug 14 vorgesehen sein.

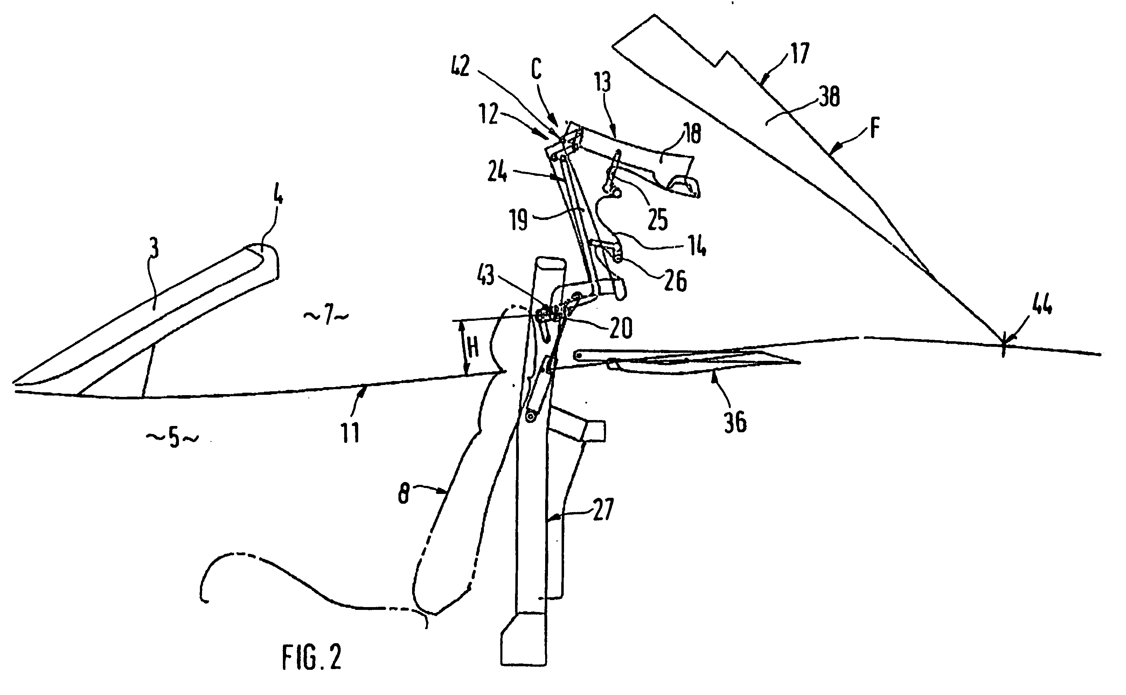

Im Auführungsbeispiel sind die aufbauseitigen Lagerabschnitte 20 an einem feststehenden Überrollbügel 27 des Personenkraftwagens 1 vorgesehen und zwar an seitlichen außenliegenden aufrechten Abschnitten des Überrollbügels 27. Anstelle des Überrollbügels 27 könnten auch aufbauseitige, nach oben hin vorstehende Konsolen zur Anlenkung des hintenliegenden Dachrahmenabschnitts 19 vorgesehen sein. Die Drehachse 43 für den hinteren Dachrahmenabschnitt 19 verläuft mit Abstand H zur darunterliegenden Gürtellinie 11 (Fig. 2).

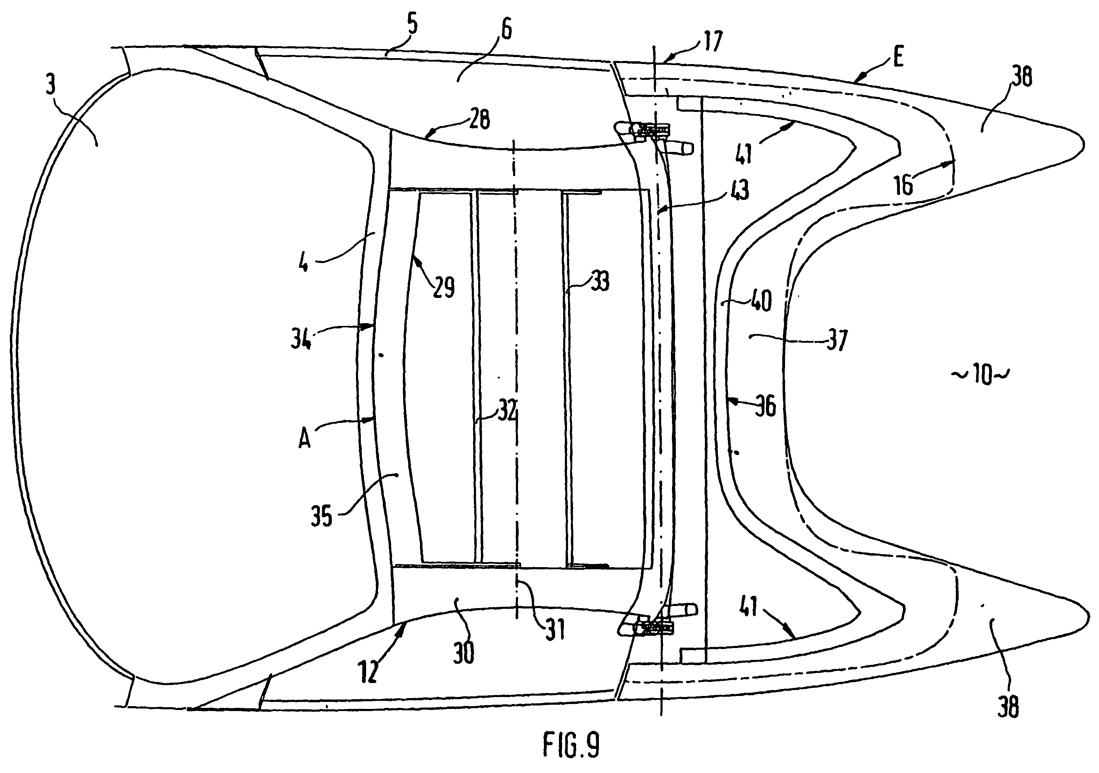

Gemäß einer zweiten Ausführungsform besteht das Verdeckgestänge 13 aus einem an den aufbauseitigen Lagerabschnitten 20 schwenkbar gelagerten äußeren U-förmigen Dachrahmenabschnitt 28 und einem vorderen, inneren Dachrahmenabschnitt 29 (Fig. 9). Der innere Dachrahmenabschnitt 29 ist etwa in einem mittleren Bereich der Längserstreckung der beiden seitlichen Schenkel 30 des äußeren Dachrahmenabschnitts 28 über eine querverlaufende, etwa horizontal ausgerichtete Drehachse 31 mit diesem verbunden. Die seitlichen Schenkel 30 des äußeren Dachrahmenabschnitts 28 erstrecken sich vom Windschutzscheibenrahmen 4 bis zum hinteren Randbereich des Dachrahmenabschnitts 28. Auch bei dieser Version können an beiden Dachrahmenabschnitten 28, 29 zusätzliche Spannspriegel 32, 33 für den Verdeckbezug 14 vorgesehen sein. Der vordere Rand 34 des querverlaufenden Verbindungssteges 35 des inneren Dachrahmenabschnitts 29 ist an den Windschutzscheibenrahmen 4 herangeführt und fluchtet mit den Enden der seitlichen Schenkel 30 des äußeren Dachrahmenabschnitts 28. Der äußere Dachrahmenabschnitt 28 ist um die querverlaufende Drehachse 43 wie bei der ersten Ausführungsform am Überrollbügel 27 drehbar gelagert.

Das Öffnen und Schließen des Faltverdecks 12 kann manuell oder motorisch erfolgen. Die Schwenkbewegung des vorderen bzw. inneren Dachrahmenabschnitts 18, 29 kann vor der Rotationsbewegung des hinteren bzw. äußeren Dachrahmenabschnitts 19, 28 oder gleichzeitig mit diesem erfolgen.

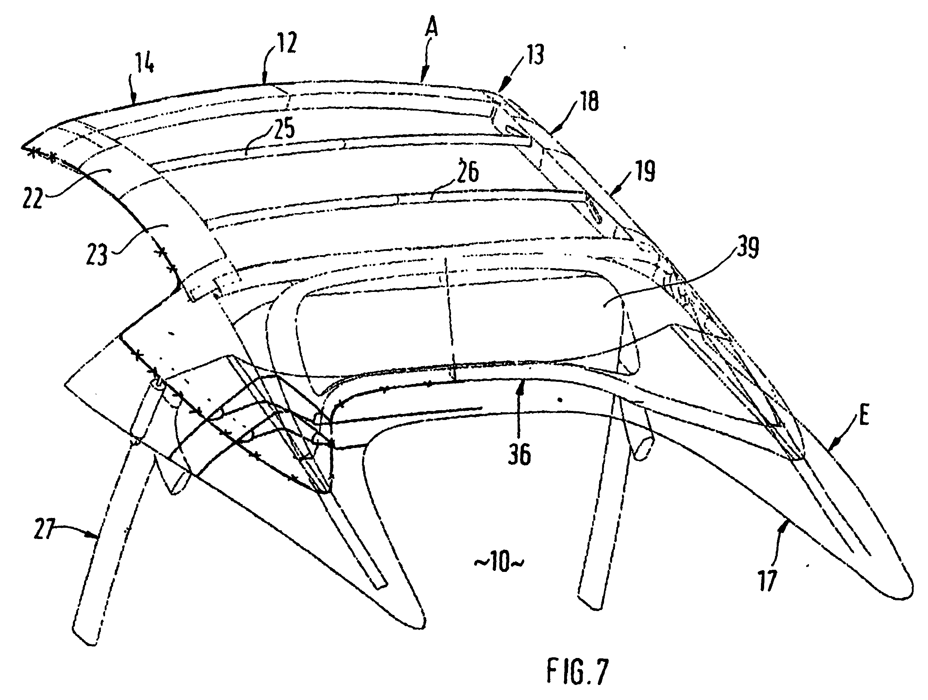

Bei beiden Versionen umfaßt das Verdeckgestänge 13 ferner einen hinteren Stoffhaltebügel 36, der zwangsgesteuert oder separat betätigbar mit der Lenkerkinematik 24 des Faltverdecks 12 verbunden ist. Am Stoffhaltebügel 36 sind der hintere untere Rand und seitlichen Ränder des faltbaren Verdeckbezuges 14 befestigt. Der Stoffhaltebügel 36 verläuft in Schließstellung des Faltverdecks 12 oberhalb des Verdeckkastendeckels 17. Dieser ist an seinem hinteren Ende um eine Querachse 44 in herkömmlicher Weise schwenkbar am Aufbau gelagert und von einer geschlossenen Stellung E in eine hochgeklappte Stellung F verlagerbar. Der Verdeckkastendeckel 17 ist der Form des darunterliegenden Aufnahmeraumes 16 angepaßt und setzt sich aus einem vorderen querverlaufenden Abschnitt 37 und zwei seitlichen längsgerichteten hochgezogenen Finnen 38 zusammen, wobei die Finnen 38 den querverlaufenden Abschnitt 37 nach oben hin und nach hinten hin überragen. Die Finnen 38 weisen an ihrem vorderen Ende ihre größte Höhe auf und fallen nach hinten hin kontinuierlich ab. Außerdem werden die Finnen 38 - in der Draufsicht gesehen - nach hinten hin schmaler. Der Stoffhaltebügel 36 folgt seitlich außenliegend etwa der Finnenkontur und setzt sich aus einem mittleren, querverlaufenden Abschnitt 40 und zwei seitlich außenliegenden etwa V-förmigen Abschnitten 41 zusammen. Die offene Seite beider V zeigt dabei nach vorne. Der seitlich außenliegende Schenkel beider V-förmiger Abschnitte 41 ist in nicht näher dargestellter Weise an die Lenkerkinematik 24 angeschlossen. Zwischen den seitlich außenliegenden Finnen 38 und dem hinteren Rand des querverlaufenden Abschnitts 37 erstreckt sich ein vorgezogener Abschnitt der Motorhaube 10. Zwischen den beiden Finnen 38, unmittelbar hinter dem Überrollbügel 27 ist der Verdeckbezug 14 mit einer relativ steilen, flexiblen Heckscheibe 39 versehen. Die hochgezogenen Finnen 38 des Verdeckkastendeckels 17 schaffen einen Aufnahmeraum für die übereinanderliegenden Schenkel 22, 23 der beiden Dachrahmenabschnitte 18, 19 bzw. 28, 29. Der Verdeckbezug 14 gemäß Fig. 7 ist an den beiden Längsseiten mit dem vorderen Rand des vorderen Dachrahmenabschnitts 18 und dem hinteren Rand des hinteren Dachrahmenabschnitts 19 verbunden. Dazwischen liegt der Verdeckbezug 14 lose an. Der Verdeckkastendeckel 17 ist aus Kunststoff oder Blech gefertigt.

## Patentansprüche

1. Faltverdeck für einen Personenkraftwagen mit einem Verdeckgestänge und einem von diesem getragenen faltbaren Verdeckbezug, wobei das Faltverdeck von einer Schließstellung in eine Ablagestellung verlagerbar ist, in der es in einem von einem Verdeckkastendeckel abgedeckten Aufnahmeraum aufgenommen ist, **dadurch gekennzeichnet, daß** das Verdeckgestänge (13) des Faltverdecks (12) zwei - in der Draufsicht gesehen - etwa U-förmig profilierte Dachrahmenabschnitte (18, 19 bzw. 28, 29) umfaßt, die in Schließstellung (A) des Faltverdecks (12) mit ihren offenen Seiten einander zugekehrt sind, wobei der - in Fahrtrichtung gesehen - weiter hintenliegende Dachrahmenabschnitt (19 bzw. 28) oberhalb der Gürtellinie (11) an gegenüberliegenden aufbauseitigen Lagerabschnitten (20) schwenkbar gelagert ist und daß in zurückgeklappter Ablagestellung (B) des Faltverdecks (12) beide U-förmigen Dachrahmenabschnitte (18, 19 bzw. 28, 29) annähernd gleichgerichtet übereinanderliegen und mit ihrer offenen Seite (21) jeweils nach hinten zeigen.

2. Faltverdeck nach Anspruch 1, **dadurch gekennzeichnet, daß** das Verdeckgestänge (13) einen vorderen U-förmigen Dachrahmenabschnitt (18) und einen hinteren U-förmigen Dachrahmenabschnitt (19) umfaßt, die an den freien Enden der aneinandergesetzten seitlichen Schenkel (22, 23) drehbar miteinander verbunden sind.

3. Faltverdeck nach den Ansprüchen 1 und 2, **dadurch gekennzeichnet, daß** der vordere Dachrahmenabschnitt (18) durch eine Schwenkbewegung um etwa 180° auf den hinteren Dachrahmenabschnitt (19) klappbar und gemeinsam mit diesem durch eine weitere Schwenkbewegung um etwa 180° in die Ablagestellung (B) innerhalb des Aufnahmeraumes (16) verlagerbar ist.

4. Faltverdeck nach Anspruch 1, **dadurch gekennzeichnet, daß** die aufbauseitigen Lagerabschnitte (20) an einem feststehenden Überrollbügel (27) des Personenkraftwagens (1) ausgebildet sind, wobei die Lagerabschnitte (20) mit Abstand (H) zur darunterliegenden Gürtellinie (11) verlaufen.

5. Faltverdeck nach Anspruch 1, **dadurch gekennzeichnet, daß** das Verdeckgestänge (13) einen an den aufbauseitigen Lagerabschnitten (20) schwenkbar gelagerten äußeren Dachrahmenabschnitt (28) und einen inneren Dachrahmenabschnitt (29) umfaßt, wobei der innere Dachrahmenabschnitt (29) etwa in einen mittleren Bereich der Längserstreckung der seitlichen Schenkel (30) des äußeren Dachrahmenabschnitts (28) drehbar mit diesem verbunden ist.

6. Faltverdeck nach einem oder mehreren der vorangegangenen Ansprüche, **dadurch gekennzeichnet, daß** das Verdeckgestänge (13) ferner einen hinteren Stoffhaltebügel (36) umfaßt, der zwangsgesteuert mit einer Lenkerkinematik (24) verbunden ist.

7. Faltverdeck nach Anspruch 6, **dadurch gekennzeichnet, daß** der Stoffhaltebügel (36) in Schließstellung (A) des Faltverdecks (12) oberhalb des Verdeckkastendeckels (17) verläuft.

8. Faltverdeck nach Anspruch 7, **dadurch gekennzeichnet, daß** der an seinem hinteren Ende schwenkbar am Aufbau gelagerte Verdeckkastendeckel (17) einen vorderen querverlaufenden Abschnitt (37) und zwei seitliche längsgerichtete hochgezogene Finnen (38) umfaßt, die den querverlaufenden Abschnitt (37) nach hinten hin überragen.

9. Faltverdeck nach einem oder mehreren der vorangegangenen Ansprüche, **dadurch gekennzeichnet, daß** der Stoffhaltebügel (36) seitlich außenliegend der Finnenkontur folgt.

10. Faltverdeck nach einem oder mehreren der vorangegangenen Ansprüche, **dadurch gekennzeichnet, daß** sich zwischen den seitlich außenliegenden Finnen (38) und dem hinteren Rand des querverlaufenden Abschnitts (37) des Verdeckkastendeckels (17) ein vogezogener Abschnitt einer Motorhaube (10) erstreckt.

## Claims

1. Folding top for a passenger vehicle having a folding-top linkage and a foldable folding-top cloth which is supported by the latter, it being possible for the folding top to be shifted from a closed position into a storage position, in which it is accommodated in a receiving space covered by a folding-top-compartment lid, **characterized in that** the folding-top linkage (13) of the folding top (12) comprises two roof frame sections (18, 19 and 28, 29) which are approximately U-shaped in profile - as seen in plan view - and, in the closed position (A) of the folding top (12), face each other with their open ends, that roof frame section (19 or 28) which is situated further to the rear - as seen in the direction of travel - being mounted pivotably above the belt line (11) on opposite bearing sections (20) on the vehicle body, and **in that**, in the folded-back storage position (B) of the folding top (12), the two U-shaped roof frame sections (18, 19 and 28, 29) are situated one above the other approximately in the same direction and in each case point with their open end (21) to the rear.

2. Folding top according to Claim 1, **characterized in that** the folding-top linkage (13) comprises a front U-shaped roof frame section (18) and a rear U-shaped roof frame section (19), which sections are connected rotatably to each other at the free ends of the lateral limbs (22, 23) which are placed onto each other.

3. Folding top according to Claims 1 and 2,
**characterized in that** the front roof frame section (18) can be folded onto the rear roof frame section (19) by means of a pivoting movement through approximately 180° and can be shifted together with the latter by means of a further pivoting movement through approximately 180° into the storage position (B) within the receiving space (16).

4. Folding top according to Claim 1, **characterized in that** the bearing sections (20) on the vehicle body are formed on a fixed roll bar (27) of the passenger vehicle (1), the bearing sections (20) running at a distance (H) from the belt line (11) situated beneath them.

5. Folding top according to Claim 1, **characterized in that** the folding-top linkage (13) comprises an outer roof frame section (28) and an inner roof frame section (29) which are mounted pivotably on the bearing sections (20) on the vehicle body, the inner roof frame section (29) being connected rotatably to the outer roof frame section (28) approximately in a central section of the longitudinal extent of the lateral limbs (30) of the said outer roof frame section (28).

6. Folding top according to one or more of the preceding claims, **characterized in that** the folding-top linkage (13) furthermore comprises a rear fabric-retaining bow (36) which is connected in a positively controlled manner to a kinematic link system (24).

7. Folding top according to Claim 6, **characterized in that** the fabric-retaining bow (36) extends above the folding-top-compartment lid (17) in the closed position (A) of the folding top (12).

8. Folding top according to Claim 7, **characterized in that** the folding-top-compartment lid (17), which is mounted at its rear end pivotably on the vehicle body, comprises a front, transversely extending section (37) and two lateral, longitudinally directed, raised fins (38) which protrude rearwards over the transversely extending section (37).

9. Folding top according to one or more of the preceding claims, **characterized in that** the fabric-retaining bow (36) follows the fin contour laterally on the outside.

10. Folding top according to one or more of the preceding claims, **characterized in that** a section of an engine cowl (10) that is pulled up extends between the fins (38) situated laterally on the outside and the rear edge of the transversely extending section (37) of the folding-top-compartment lid (17).

## Revendications

1. Capote convertible pour véhicule automobile comprenant une tringlerie de capote et un revêtement de capote pliable porté par celle-ci, la capote convertible pouvant être déplacée d'une position de fermeture dans une position de rangement dans laquelle elle est reçue dans un espace de réception recouvert par un couvercle de compartiment de capote, **caractérisée en ce que** la tringlerie de capote (13) de la capote convertible (12) comprend deux portions de cadre de toit (18, 19, respectivement 28, 29) approximativement profilées en forme de U - vu de dessus, qui sont tournées l'une vers l'autre dans la position de fermeture (A) de la capote convertible (12) avec leurs côtés ouverts, la portion de cadre de toit (19, respectivement 28) se trouvant le plus en arrière - vu dans la direction de transport - étant montée à pivotement au-dessus de la ligne de ceinture (11) sur des portions de palier (20) opposées du côté de la carrosserie et **en ce que** dans la position de rangement repliée (B) de la capote convertible (12), les deux portions de cadre de toit en forme de U (18, 19 respectivement 28, 29) sont superposées de manière approximativement orientée dans le même sens et sont tournées respectivement vers l'arrière avec leur côté ouvert (21).

2. Capote convertible selon la revendication 1,
**caractérisée en ce que** la tringlerie de capote (13) comprend une portion de cadre de toit avant en forme de U (18) et une portion de cadre de toit arrière en forme de U (19), qui sont connectées l'une à l'autre de manière rotative au niveau des extrémités libres des branches latérales (22, 23) placées l'une contre l'autre.

3. Capote convertible selon les revendications 1 et 2, **caractérisée en ce que** la portion de cadre de toit avant (18) peut être rabattue par un mouvement de pivotement d'environ 180° sur la portion de cadre de toit arrière (19) et conjointement avec celle-ci peut être déplacée par un mouvement de pivotement supplémentaire d'environ 180° dans la position de rangement (B) à l'intérieur de l'espace de réception (16).

4. Capote convertible selon la revendication 1,
**caractérisée en ce que** les portions de palier (20) du côté de la carrosserie sont réalisées sur un arceau de sécurité (27) fixe du véhicule automobile (1), les portions de palier (20) s'étendant à une distance (H) de la ligne de ceinture (11) située en dessous.

5. Capote convertible selon la revendication 1,
**caractérisée en ce que** la tringlerie de capote (13) comprend une portion de cadre de toit extérieure (28) montée de manière pivotante sur les portions de palier (20) du côté de la carrosserie et une portion de cadre de toit intérieure (29), la portion de cadre de toit intérieure (29) étant connectée approximativement dans une région centrale de l'étendue longitudinale des branches latérales (30) de la portion de cadre de toit extérieure (28) de manière rotative avec cette dernière.

6. Capote convertible selon l'une quelconque ou plusieurs des revendications précédentes, **caractérisée en ce que** la tringlerie de capote (13) comprend en outre un arceau de fixation d'étoffe arrière (36) qui est connecté par force à une cinématique à bras oscillant (24).

7. Capote convertible selon la revendication 6,
**caractérisée en ce que** l'arceau de fixation d'étoffe (36) s'étend dans la position de fermeture (A) de la capote convertible (12) au-dessus du couvercle du compartiment de capote (17).

8. Capote convertible selon la revendication 7,
**caractérisée en ce que** le couvercle du compartiment de capote (17) monté à son extrémité arrière de manière pivotante sur la carrosserie comprend une portion avant (37) s'étendant transversalement et deux ailes latérales (38) relevées orientées longitudinalement, qui dépassent vers l'arrière de la portion (37) s'étendant transversalement.

9. Capote convertible selon l'une quelconque ou plusieurs des revendications précédentes, **caractérisée en ce que** l'arceau de fixation d'étoffe (36) suit le contour des ailes latéralement extérieur.

10. Capote convertible selon l'une quelconque ou plusieurs des revendications précédentes, **caractérisée en ce qu'**une portion avancée d'un capot (10) s'étend entre les ailes (38) latéralement extérieures et le bord arrière de la portion (37) s'étendant transversalement du couvercle du compartiment de capote (17).
